# EUROPÄISCHE PATENTSCHRIFT

(11) **EP 3 781 855 B1**
(45) Veröffentlichungstag und Bekanntmachung des Hinweises auf die Patenterteilung: **02.08.2023**
(21) Anmeldenummer: 19714142.7
(22) Anmeldetag: 21.03.2019
(51) Int. Cl.: F16L 23/08, F16L 23/20

(54) **SCHELLE**
CLAMP
COLLIER DE SERRAGE

(30) Priorität: 20.04.2018 DE 102018109581
(43) Veröffentlichungstag der Anmeldung: 24.02.2021
(73) Patentinhaber: NORMA Germany GmbH, 63477 Maintal (DE)
(72) Erfinder: COTTLE, Ben, Newbury Berkshire RG14 6RU (GB); JAROSZ, Mateusz, Reading RG6 5UX (GB); AKREMI, Belal, Newbury RG14 1BF (GB); RUMBAUSKIENE, Tatjana, Newbury RG19 8XU (GB); CARTER, Mark, Oxford OX1 4XR (GB); BAUDOIN, Manuel, Newbury Berkshire RG14 7QD (GB)
(74) Vertreter: Patentanwälte Olbricht Buchhold Keulertz
(86) Internationale Anmeldenummer: PCT/EP2019/057078
(87) Internationale Veröffentlichungsnummer: WO 2019/201543

(56) Entgegenhaltungen:
- DE-A1-102011 116 768
- FR-A3- 2 925 647
- US-A1- 2018 094 755

## Beschreibung

Die Erfindung betrifft ein Ringelement für eine Schelle gemäß dem Oberbegriff von Anspruch 1 sowie eine Schelle mit einem entsprechenden Ringelement und eine Leitungsverbindungsanordnung mit einer derartigen Schelle.

Eine Schelle wie eine Profilschelle kann etwa zum fluiddichten Verbinden zweier Rohrenden eingesetzt werden, die mit radial nach außen gerichteten Flanschen ausgestattet sind. Hierzu werden die Flansche zueinander positioniert und die Profilschelle mit einem spannbaren, in der Regel zwei oder mehrteiligen Schellenband wird auf die Flansche aufgesetzt. Die Verbindung wird durch Spannen der Profilschelle fixiert, indem axiale und radiale Haltekräfte auf die Flansche einwirken. Ein Schellenband der Profilschelle weist hierfür üblicherweise einen U-förmigen oder einen V-förmigen Querschnitt auf, der mit den Flanschen in Flächenkontakt gerät.

Zum Erreichen der gewünschten Abdichtung wird zwischen die Flansche oftmals ein Ringelement mit einem ringförmigen Dichtbereich eingelegt, der mit einem axialen Flächenkontakt mit beiden Flanschen gelangt, wobei die Dichtwirkung durch das Verspannen der Flansche erzielt wird.

Für eine ideale Abdichtung ist es erforderlich, dass das Ringelement präzise gegenüber den Flanschen ausgerichtet ist. Ist das Ringelement separat und nicht an der Schelle oder einem Flansch befestigt, muss ein Benutzer die Schelle, das Ringelement und die zu verbindenden Rohre gleichzeitig handhaben, so dass der Einbau der Schelle erschwert wird.

Zum Vereinfachen der Positionierung des Ringelements an der Schelle sind mehrere Lösungen bekannt. Beispielsweise zeigt DE 602 10 142 T2 eine Profilschelle, bei der das Ringelement mit Hilfe von verformbaren Befestigungsklammern formschlüssig am Schellenband fixiert wird. Die Befestigungsklammern können dabei einstückig mit dem Ringelement ausgebildet sein und positionieren das Ringelement radial innerhalb der Schelle.

DE 10 2011 116 768 A1 schlägt vor, das Ringelement mit am Umfang verteilt angeordneten Abstandshaltern zu versehen, die elastisch verformbar sind und an einer radialen Innenseite des Schellenbandes unter einer Vorspannung anliegen. Das Ringelement wird so kraftschlüssig innerhalb der Profilschelle am Schellenband gehalten, wobei das Ringelement werkzeuglos eingebracht werden kann.

DE 10 2016 103 687 A1 offenbart eine Profilschelle mit einem Schellenband und einem ringförmigen Ringelement, wobei das Schellenband zwei Spannköpfe aufweist, die über ein Spannelement miteinander verbunden sind. Um einen zusätzlich verdrehsicheren Halt des Ringelements an der Profilschelle zu erhalten, weist das Ringelement eine sich radial nach außen erstreckende Haltelasche auf, die am Spannelement gehalten ist.

Aufgabe der Erfindung ist es, ein Ringelement sowie eine Schelle vorzuschlagen, bei der eine Positionierung des Ringelements an der Schelle und eine Verdrehsicherung des Ringelements weiter verbessert wird und eine Vormontage der Schelle an einem Flansch möglich ist.

Hauptmerkmale der Erfindung sind im kennzeichnenden Teil von Anspruch 1 angegeben. Ferner wird mit Anspruch 2 eine Schelle mit einem erfindungsgemäßen Ringelement vorgeschlagen. Die Ansprüche 16 und 17 betreffen eine Leitungsverbindungsanordnung, bei der eine derartige Schelle eingesetzt wird.

Die eingangs genannte Aufgabe wird durch ein Ringelement für eine Schelle mit einem Schellenband, das zwei Spannköpfe aufweist, die über ein Spannelement miteinander verbunden sind, wobei das Ringelement radial innerhalb des Schellenbands positionierbar ist, wobei das Ringelement mindestens ein Halteelement zum Abstützen an einer Innenseite des Schellenbands aufweist, wobei das Halteelement über einen Befestigungsabschnitt in einer Axialrichtung gegenüber dem Ringelement versetzt ist und sich zumindest abschnittsweise in einer Radialrichtung nach außen erstreckt, wobei das Halteelement zumindest einen Federabschnitt aufweist, der sich zumindest abschnittsweise in Umfangsrichtung und Radialrichtung erstreckt, dadurch gelöst, dass das Halteelement zwei Federabschnitte aufweist, die sich jeweils vom Befestigungsabschnitt in eine entgegengesetzte Umfangsrichtung erstrecken.

Zur Lösung der oben genannten Aufgabe ist bei einer Schelle, insbesondere einer Profilschelle mit einem Schellenband und einem ringförmigen Ringelement, wobei das Schellenband zwei Spannköpfe aufweist, die über ein Spannelement miteinander verbunden sind, ein erfindungsgemäßes Ringelement radial innerhalb des Schellenbands positioniert

Das Ringelement kann sich erfindungsgemäß folglich mithilfe eines oder mehrerer Halteelemente innenseitig am Schellenband abstützen oder daran fixiert werden. Das mindestens eine Halteelement erstreckt sich hierzu mit seinem Befestigungsabschnitt auch in eine axiale Richtung und ist damit axial gegenüber dem Ringelement versetzt. Bei innerhalb der Schelle angeordneten Ringelement liegt dieses damit auch axial außermittig bezogen auf die Schelle. Das Ringelement ist dadurch in der Nähe oder in Kontakt mit einer der Flanken des Schellenbands angeordnet, gegen die beispielsweise es beim Verspannen der Profilschelle auf den Flanschen der Rohrenden ohnehin gedrückt wird. Die axiale Position des Ringelements bezüglich der Schelle bleibt somit bei diesem Vorgang nahezu unverändert. Dabei können die Halteelemente unterschiedliche Geometrien aufweisen und formschlüssig und/oder kraftschlüssig mit dem Schellenband zusammenwirken, wobei sie insbesondere beim Spannen der Schelle elastisch verformt werden. Dabei ist eine einstückige Ausgestaltung der Halteelemente mit dem Ringelement vorteilhaft.

Vorzugsweise ist das Schellenband als Profilband ausgestaltet und weist zwei radial nach innen geneigte Flanken auf. Diese Flanken kommen dann beim Spannen der Schelle in Anlage mit den Flanken der Rohrenden und bewirken nicht nur eine radiale Krafteinwirkung, sondern auch ein axiales Verspannen der Rohrenden aufeinander zu.

In einer vorteilhaften Ausführungsform weist das Ringelement mindestens eine Fixierlasche auf, die sich vom Ringelement axial nach außen und gegebenenfalls gegenüber dem Ringelement radial nach innen oder außen versetzt erstreckt. Eine solche Fixierlasche kann ähnlich wie eine vorangehend genannte Haltelasche ausgebildet sein. Die Fixierlasche ist bevorzugt einstückig mit dem Ringelement ausgebildet. Ihre Funktion liegt insbesondere in einem Eingriff in eine Ausnehmung eines Flansches, um eine Verdrehsicherung des Ringelements zu bewirken. Die räumliche Ausdehnung der Fixierlasche muss daher nicht sehr groß sein. Durch die optisch an einer Außenseite des Ringelements und daher an einer Außenseite des Flanschs leicht sichtbar angeordnete Fixierlasche kann ein Benutzer auch nach Verbindung der beiden Flansche miteinander prüfen, dass das Ringelement korrekt eingesetzt ist.

Bevorzugt sind mehrere, insbesondere drei oder Fixierlaschen an dem Ringelement angeordnet und in Umfangsrichtung gleichmäßig über das Ringelement verteilt. Durch die Verwendung mehrerer verteilter Fixierlaschen kann zum einen die Verdrehsicherung verbessert und zum anderen eine Exzentrizität des Ringelements vermieden werden. Durch das Eingreifen der Fixierlaschen in die korrespondierenden Ausnehmungen eines Flansches erfolgt eine Zentrierung. Die zentrierte Ausrichtung kann folglich auch nach Verbindung der Flansche durch optische Kontrolle der Fixierlaschen an den entsprechenden Ausnehmungen überprüft werden. Die Fixierlaschen können darüber hinaus dann nicht nur eine Verdrehsicherung bewirken, sondern auch das Ringelement mit der Schelle in einer Vormontageposition am Flansch vorpositionieren. Dies erleichtert die Montage.

Dafür ist vorteilhafterweise vorgesehen, dass das Ringelement über die Fixierlaschen kraftschlüssig an einem Leitungsende befestigbar ist. Die Fixierlaschen liegen dann unter Spannung am Rohrende an und bewirken somit eine Vorpositionierung der Schelle am Flansch. Für die Vorpositionierung der Schelle an dem Flansch sind keine Werkzeuge erforderlich.

Die mindestens eine Fixierlasche kann bevorzugt flach ausgebildet sein eine im Wesentlichen rechteckige Form aufweisen. Dies schließt nicht aus, dass Kanten und/oder Ecken abgerundet sind. Die Fixierlasche ist damit leicht zu fertigen und kann beispielsweise als ein teilweise ausgestanzter, abgebogener Abschnitt des Ringelements gefertigt sein, welches auf Basis eines blechartigen Materials gefertigt sein könnte.

Besonders bevorzugt weist das Ringelement mindestens eine Positionierlasche auf, die sich insbesondere radial von dem Ringelement nach außen durch eine korrespondierende Öffnung in dem Schellenband erstreckt. Die Positionierlasche erstreckt sich dabei vorzugsweise schräg zu einer am Ringelement anliegenden Tangente, also sowohl radial nach außen als auch in Umfangsrichtung. Dabei kann sie gegenüber dem Ringelement axial versetzt sein, insbesondere um eine gleiche Distanz wie die Haltelaschen. Ferner ist die Positionierlasche bevorzugt elastisch und plastisch verformbar und kann nach Durchstecken durch die korrespondierende Öffnung unter plastischer Verformung umgebogen werden. Das Ringelement kann dadurch verlierfest an dem Schellenband gehalten werden, wobei das Ringelement gleichzeitig aufgrund der Elastizität der Positionierlasche noch im gewissen Maße gegenüber der Schelle bewegbar ist und damit ein Spannen der Schelle problemlos zulässt. Die Positionierlasche kann dafür beispielsweise mindestens einen Knick aufweisen, der der Positionierlasche eine gewisse Elastizität zum Ausgleich der Spannbewegung des Schellenbandes verleihen kann. Bevorzugt ist die Positionierlasche in der Nähe einer biegbaren Brücke angeordnet, die Hälften des Schellenbands miteinander verbindet und die in der Regel diametral gegenüber den Spannköpfen angeordnet ist. Dabei sind bevorzugterweise zwei Positionierlaschen vorgesehen, die auf unterschiedlichen Seite der Brücke angeordnet sind. Damit wird ein sicherer Halt erreicht. Diese Ausführungsform kann alternativ oder zusätzlich zu vorgespannten Fixierlaschen verwendet werden.

Es ist vorgesehen, dass mindestens eins der Halteelemente zumindest einen Federabschnitt aufweist, der sich zumindest abschnittsweise in Umfangsrichtung und Radialrichtung erstreckt. Die Halteelemente mit den Federabschnitten sind dabei geformt, dass sie in das Schellenband eingreifen können, also eine Innenseite des Schellenbands zwischen dessen Flanken kontaktieren. Der radiale Abstand zu dem Ringelement ist dabei derart gewählt, dass bei im Eingriff befindlichen Positionierfedern das Ringelement durch das Schellenband in der gewünschten Position, etwa in einer radial zentrierten Position bezüglich des Schellenbands gehalten wird. Die Halteelemente mit den Federabschnitten weisen insbesondere ein federelastisches Material auf, so dass sie das Ringelement sowohl bei ungespanntem, als auch bei gespanntem Schellenband halten können. Beim Spannen des Schellenbandes werden die Halteelement folglich radial nach innen federelastisch verformt. Bei Verwendung mehrerer Halteelemente, die in Umfangsrichtung über das Ringelement verteilt sind, kann zudem eine zentrierte Halterung des Ringelements relativ zu dem Schellenband aufrechterhalten werden. Selbstverständlich bedeutet dies auch, dass bei kraftschlüssig mit einem Flansch verbundenen Ringelement umgekehrt die Schelle durch die Halteelemente entsprechend relativ zu dem Flansch ausgerichtet ist.

Vorzugsweise ist ein freies Ende des Federabschnitts komplementär zu einer Innenkontur des Schellenbandes geformt und liegt an einer Innenseite des Schellenbands an. Damit wird zum einen eine relativ große Kontaktfläche erhalten, zum anderen kann das Halteelement das Ringelement auch in axialer Richtung an der Schelle sichern.

In einer bevorzugten Ausführungsform weist der Federabschnitt mindestens eine radial nach außen gerichtete Auswölbung auf, die an einer Innenseite des Schellenbands anliegt. Die Auswölbung kann zum einen die axiale Halterung zwischen dem Ringelement und dem Schellenband verbessern. Zum anderen kann ein definierter Kontaktbereich mit dem Schellenband erhalten werden, so dass hierdurch die wirksame Federkraft sehr gut einstellbar ist. Sind sämtliche Federabschnitte mit derselben Auswölbung an derselben umfangsseitigen Relativposition versehen, sind alle Halteelemente weitgehend mit derselben Federcharakteristik ausgestattet, so dass durch ein Kräftegleichgewicht zwischen den aus unterschiedlichen radialen Richtungen wirkenden Kräften der Halteelemente die Zentrierung des Ringelements nachgeführt wird.

Erfindungsgemäß weist das Haltelement zwei Federabschnitte aufweist, die sich jeweils vom Befestigungsabschnitt in eine entgegengesetzte Umfangsrichtung erstrecken. Dabei erstrecken sich die Positionierfedern vorzugsweise über identische Längen in Umfangsrichtung, so dass der Befestigungsabschnitt in der Mitte zwischen den Federabschnitten angeordnet ist. Eine radiale Federwirkung kann durch entsprechende Gestaltung der sich in Umfangsrichtung erstreckenden Federabschnitte vorgesehen werden. Durch den mittig angeordneten Befestigungsabschnitt geht dann stets eine im Wesentlichen nur radiale Kraft von jeder Positionierfeder auf das eigentliche Ringelement aus.

In einer bevorzugten Ausgestaltung weist das Halteelement zumindest an einem Federabschnitt eine Verlängerung auf, die innenseitig am Spannkopf anliegt. Insbesondere weisen dabei beide benachbart zu den Spannköpfen angeordnete Halteelemente zumindest einen Federabschnitt mit einer derartigen Verlängerung auf, die jeweils innenseitig an einem der Spannköpfe anliegen. Diese Verlängerung bewirkt eine Abstützung des Ringelements an den Spannköpfen und somit eine Verdrehsicherung zwischen Ringelement und Schellenband.

In einer weiteren bevorzugten Ausgestaltung weist das Ringelement mindestens einen Befestigungshaken auf, der sich über einen Radialabschnitt vom Ringelement radial nach außen erstreckt, wobei sich an den Radialabschnitt ein nach innen gebogener Kontaktabschnitt anschließt, der zumindest teilweise parallel zu einer Außenseite des Ringelements verläuft. Mit diesem Befestigungshaken kann das Ringelement an einem Flansch eines Rohrendes befestigt werden, wobei der Befestigungshaken den Flansch übergreift und gegebenenfalls unter Vorspannung an diesem anliegt. Damit kann das Ringelement und somit die Schelle sicher am Flansch vorpositioniert werden.

Dabei weist das Ringelement vorzugsweise zwei nebeneinander angeordnete Befestigungshaken aufweist, die im Bereich des Spannelements angeordnet sind. Im Bereich des Spannelements ist das Schellenband in der Regel unterbrochen, so dass dort ausreichen Raum für die Befestigungshaken vorhanden ist, die damit einem Spannen der Schelle nicht im Wege sind.

Dabei ist vorteilhafterweise vorgesehen, dass das Ringelement mindestens zwei einander diametral gegenüberliegende Befestigungshaken aufweist, Insbesondere ist dabei ein Befestigungshaken einem Paar im Bereich des Spannelements ausgebildeter Befestigungshaken gegenüberliegend angeordnet. Das Ringelement wird dadurch gegenüber dem Flansch sicher positioniert, wobei in der Regel gegenüber dem Spannelement im Schellenband eine gelenkige Verbindung in Form einer Brücke vorgesehen ist, wodurch auch dort ausreichen Bauraum für den Befestigungshaken zur Verfügung steht. Dabei kann der Befestigungshakten gleichzeitig als Rotationssicherung zwischen dem Ringelement und dem Schellenband dienen, indem er zwischen die über die Brücke miteinander verbundenen Teile des Schellenbands eingreift.

In einer besonders bevorzugten Ausgestaltung weist das Ringelement einen sich in Axialrichtung erstreckenden und konisch zulaufenden Dichtbereich auf. Der Dichtbereich ist dabei im Wesentlichen ringförmig und kann an einer Innenseite des Flansches zur Anlage gebracht werden. Das Ringelement hat somit eine integrierte Dichtfunktion, um die Dichtigkeit der Verbindung zwischen den Rohrenden zu erhöhen.

Dabei ist besonders bevorzugt, dass die Fixierlasche von einem radial inneren Rand des Dichtbereichs ausgeht, wobei die Haltelasche und gegebenenfalls der Befestigungshaken von einem radial äußeren Rand des Ringelements ausgeht. Damit kann zum einen eine zuverlässige Vorpositionierung der Schelle am Flansch als auch eine gute Abdichtung nach Spannen der Schelle erhalten werden.

Insbesondere ist vorgesehen, dass das Halteelement axial auf einer anderen Seite des Ringelements angeordnet ist als die Fixierlasche. Dadurch wird das Ringelement unmittelbar an dem Flansch positioniert, an dem es über die Fixierlasche gehalten werden soll, wobei die Schelle axial etwas gegenüber diesem Flansch versetzt ist und somit beim Spannen in Axialrichtung kaum noch bewegt wird.

In einer bevorzugten Ausgestaltung ist der Dichtbereich als ringförmiges Dichtelement ausgebildet, das mit dem Ringelement verbunden ist. Dies hat gegenüber der vorbeschriebenen einstückigen Ausgestaltung von Dichtbereich und Ringelement den Vorteil, dass das Dichtelement beispielsweise aus deinem anderen Material hergestellt sein kann als das Ringelement. Das Ringelement dient dabei sozusagen zur Positionierung des Dichtelements sowie der Schelle am Flansch eines Rohrendes.

Die eingangs genannte Aufgabe wird außerdem durch eine Leitungsverbindungsanordnung mit einem Leitungsende, an dem ein Flansch ausgebildet ist, auf den eine Schelle in der vorbeschriebenen Ausgestaltung angeordnet ist, gelöst. Die Schelle kann bevorzugt auf dem Rohrende bzw. dem Flansch vormontiert werden und dort in noch nicht oder kaum gespannten Zustand gehalten werden, bis die Verbindung mit einem zweiten Rohrende hergestellt und die Schelle gespannt wird.

Dabei ist besonders bevorzugt, dass der Flansch mindestens eine umfangsseitige Ausnehmung aufweist, in die die mindestens eine Fixierlasche des Ringelements eingreift. Dadurch erfolgt eine formschlüssige Verbindung zwischen dem Ringelement und einer korrespondierenden, radial außen an dem Flansch angeordneten umfangsseitigen Ausnehmung, die für eine verdrehsichere Ausrichtung des Ringelements sorgt. Weiterhin kann die Fixierlasche vorgespannt sein, um eine kraftschlüssige Verbindung mit dem Flansch einzugehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Flansch mit einer als Profilschelle Schelle in einer dreidimensionalen Darstellung,
- Fig. 2: ein Ringelement einer Shelle,
- Fig. 3: ein Ringelement mit Dichtbereich einer Schelle und
- Fig. 4: eine auf einem Flansch eines Rohrendes angeordnete Schelle.

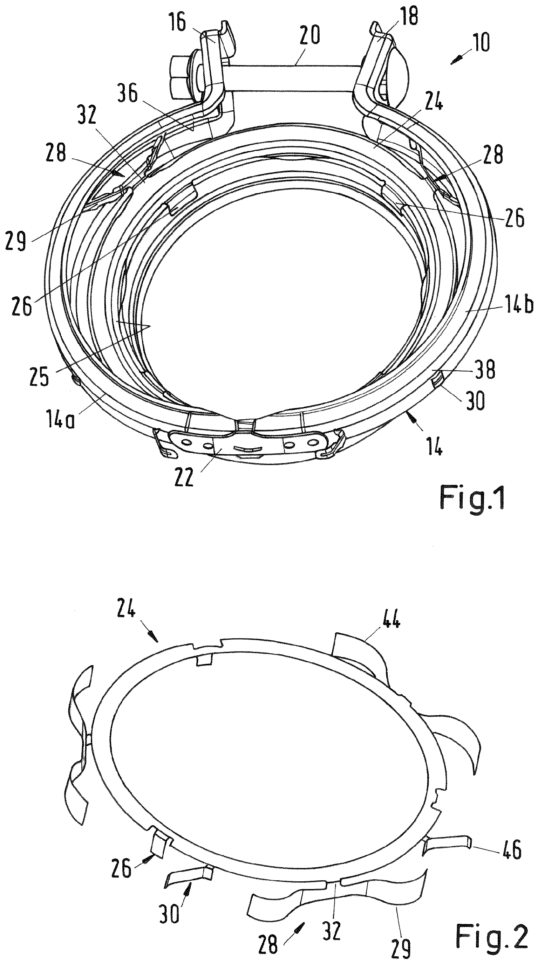

Fig. 1 zeigt eine erfindungsgemäße Schelle 10, die als Profilschelle ausgebildet ist und an einem Flansch 12 vorpositioniert und geöffnet, d.h. nicht verspannt ist. Die Schelle 10 weist ein Schellenband 14 mit zwei Spannköpfen bzw. Spannbacken 16 und 18 auf, welche über ein Spannelement 20 miteinander verbunden sind und durch Umbiegen der Enden des Schellenbandes 14 hergestellt sein können. Es ist aber auch denkbar, die Spannbacken beispielsweise durch in Schleifen umgebogene Enden des Schellenbands zu bilden, wobei in die Schleifen Spannbolzen eingeführt sind. Dabei kann das Profil des Schellenbands auch relativ stark von der gezeigten Form mit einem im Wesentlichen V-förmigen Querschnitt mit zwei von einer ebenen Innenseite radial nach innen geneigten Flanken abweichen.

Das Schellenband 14 ist in zwei Profilhälften 14a und 14b unterteilt, welche an einer Seite, die den Spannköpfen 16 und 18 entgegengesetzt ist, mittels eines Brückenelements 22 miteinander verbunden sind. Hierdurch wird eine gewisse Elastizität bereitgestellt, wobei das Brückenelement 22 als Gelenk wirkt, das eine Relativbewegung beider Hälften 14a und 14b beim Verspannen erlaubt. Das Brückenelement kann dabei auch einstückig mit den Schellenband 14 hergestellt werden, beispielsweise durch eine Aussparung im Bereich der Flanken des Schellenbands. Dabei ist auch eine beispielsweise dreiteilige Ausgestaltung des Schellenbands möglich.

Ein beispielhaft ringförmig ausgeführtes Ringelement 24 ist innerhalb der Schelle 10 angeordnet. Das Ringelement 24 weist Halteelemente 28, Fixierlaschen 26, Positionierlaschen 30 und Befestigungshaken 50 auf. Auf die Fixierlaschen 26 wird weiter nachfolgend bezüglich Fig. 2 eingegangen. Die Haltelemente 28 weisen einen Befestigungsabschnitt 32 auf, der sich an einen Außenumfang des Ringelements 24 anschließt. Der Befestigungsabschnitt 32 erstreckt sich in einer axialen Richtung von dem Ringelement 24. Von diesem erstrecken sich in Umfangsrichtung symmetrisch hierzu zwei fingerartige Erweiterungen 34, welche eine bereichsweise radial nach außen und bereichsweise radial nach innen geöffnete, gekrümmte Form aufweisen und Federabschnitte 29 bilden. Insgesamt befinden sich drei Halteelemente 28 am Ringelement 24 und sind mit einer Innenkontur 36 des Schellenbandes 14 in Eingriff. Hierdurch werden das Ringelement 24 und das Schellenband 14 symmetrisch zueinander ausgerichtet. Beim Verspannen des Schellenbandes 14 können die Halteelemente 28 mit den Federabschnitten 29 elastisch einfedern und gewährleisten dabei ihre symmetrische Relativposition.

Die Positionierlaschen 30 sind ebenfalls an dem Ringelement 24 angeordnet und erstrecken sich radial nach außen. In Fig. 1 sind zwei Enden von Positionierlaschen zu sehen, welche durch Öffnungen 38 des Schellenbandes 14 durchtreten und an der Außenseite des Schellenbandes umgebogen sind. Hierdurch wird eine Verbindung zwischen dem Ringelement 24 und der Schelle 10 ermöglicht, die die Handhabung der Schelle 10 deutlich verbessert.

Optional können weiterhin radial nach innen ragende Finger eingesetzt werden, die an einem Innenumfang des Ringelements 24 angeordnet sind. Diese könnten elastisch verformbar sein und insbesondere unter Vorspannung an dem Flansch 12 angelegt werden. Dadurch wird zusätzlich ein kraftschlüssiger Halt des Ringelements 24 an dem Flansch 12 verursacht. Die kraftschlüssige Halterung kann auch durch die Fixierlaschen 26 erfüllt werden, falls gewünscht.

Fig. 2 zeigt das Ringelement 24 in einer etwas freigestellten Darstellung. Hier wird deutlich, dass das Ringelement 24 auf einem blechartigen Werkstück basierend hergestellt werden kann. Die Halteelemente 28, die Fixierlaschen 26 und die Positionslaschen 30 sind einstückig mit dem Ringelement 24 ausgebildet und können durch Ausstanzen und Umformen erzeugt sein.

Die Halteelemente 28 erstrecken sich beispielhaft von ihrem Befestigungsabschnitt 32 in Umfangsrichtung nach außen und besitzen auf dieser Strecke jeweils eine S-Form. Hierdurch werden zwei Auswölbungen 44 gebildet, die radial weiter nach außen ragen als der zugehörige Befestigungsabschnitt 32. Beim Einsetzen des Ringelements 24 oder beim Aufsetzen des Schellenbandes 14 auf das Ringelement 24 kann folglich ein definierter Flächenkontakt zwischen den Auswölbungen 44 und der Innenkontur 36 des Schellenbandes 14 hergestellt werden. Dieser erlaubt ein weitgehend identisches Federverhalten aller Positionierfedern 28 an dem Schellenband 14 und führt zu einer Zentrierung des Ringelements 34 im geöffneten und geschlossenen Zustand der Schelle 10.

Eine Fixierlasche 26 ist radial nach innen versetzt und befindet sich in radialer Richtung ungefähr mittig zwischen dem Außenumfang und einem Innenumfang des Ringelements 24. Beispielhaft wird eine relativ kleine, rechteckig ausgeführte Fixierlasche 26 dargestellt, welche sich ausschließlich axial von dem Ringelement 24 erstreckt.

Im Flansch des Rohrendes können nun umfangsseitige Ausnehmungen 48 vorgesehen werden, deren Positionen mit denen der Fixierlaschen 26 korrelieren. Das Ringelement 24 kann folglich auf den Flansch 12 aufgelegt werden, so dass die Fixierlaschen 26 in die Ausnehmungen 48 geraten und damit eine Rotationssicherung bewirken.

Die Positionierlaschen 30 erstrecken sich in axialer Richtung von dem Ringelement 24 im gleichen oder ähnlichen Maß wie die Halteelemente 28. Zusätzlich ragen Positionierlaschen 30 radial relativ weit nach außen, so dass sie durch Öffnungen 38 des Schellenbandes 14 ragen können. Ein Endabschnitt 46 der Positionierlaschen 30 kann nach dem Durchstecken durch die Öffnungen 38 umgebogen werden, so dass eine formschlüssige Verbindung mit dem Schellenband 14 erfolgt. Aufgrund einer abgewinkelten Form kann eine Positionierlasche 30 einen aufgrund der Verspannung der Schelle 10 variablen Abstand zwischen der Innenkontur 36 und einem Außenumfang des Ringelements 24 durch elastische Verformung ausgleichen.

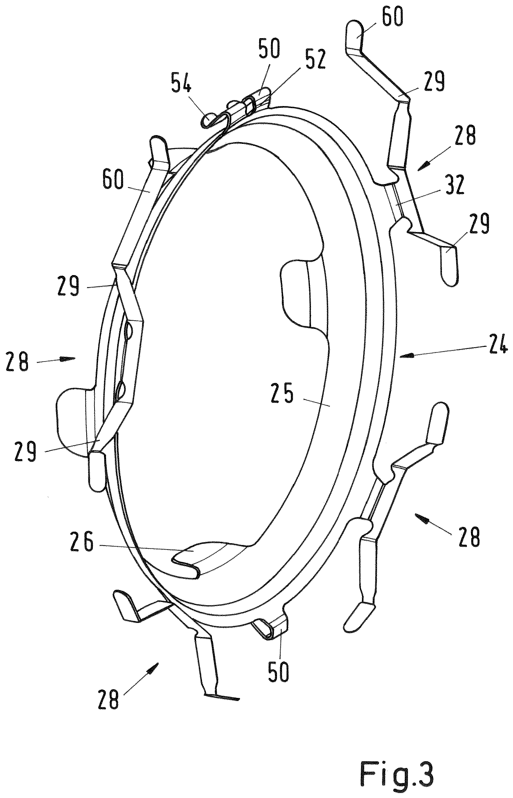

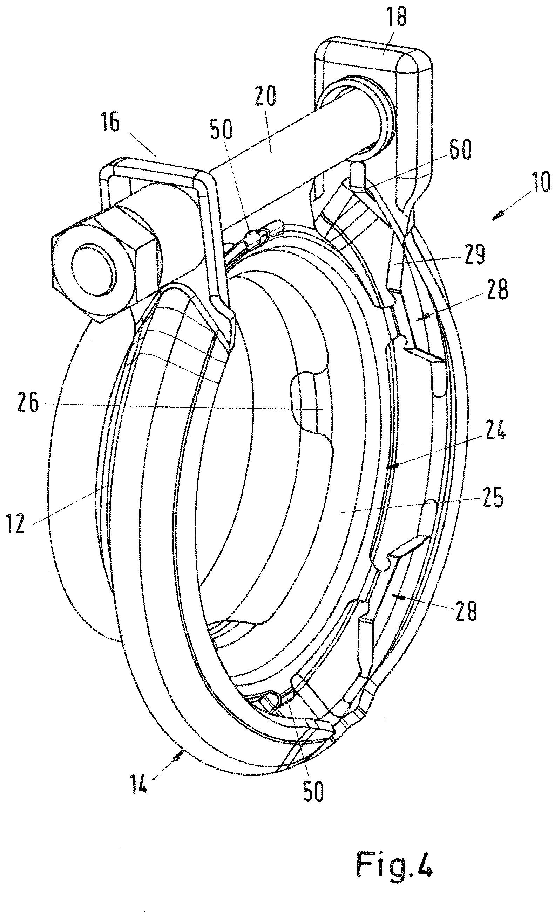

In Fig. 3 ist nun das Ringelement 24 mit integrierten Dichtbereich 25 dargestellt, der einen sich konisch verjüngenden und in axialer Richtung erstreckenden Fortsatz des Ringelement 24 bildet. Dabei entspricht eine Neigung des Dichtbereichs 25 in etwa der Neigung an einer Innenseite des Flansches, so dass er an diesem flächig zur Anlage gebracht werden kann. Dies ist in Fig. 4 dargestellt.

Die Fixierlaschen 26 gehen dabei von einem axialen Rand des Dichtbereichs 25 aus, während die Halteelemente 28 sowie Befestigungshaken 50 am entgegengesetzten axialen Rand des Ringelements 24 angeordnet sind und sich in entgegengesetzte axiale Richtung erstrecken. Dadurch können die Fixierlaschen 26 das Ringelement 24 mit dem Dichtbereich 25 am Flansch vorpositionieren, während über die Halteelemente 28 und die Befestigungshaken 50 die Schelle 10 gegenüber dem Ringelement 24 vorpositioniert wird und diese im Wesentlichen bereits der Position entspricht, die die Schelle 10 nach dem Spannen einnimmt.

An dem im montierten Zustand benachbart zum Spannkopf 18 angeordneten Halteelementen 28 ist der dem Spannkopf zugewandte Federabschnitte 29 jeweils mit einer Verlängerung 60 versehen, die an jeweils einem Spannkopf innenseitig zur Anlage gelangen kann und damit eine Verdrehsicherung bewirkt. Die Verlängerung 60 umfasst dabei im Wesentlichen zwei gerade Abschnitte, von denen der eine sich an den Federabschnitt anschließt und in den anderen übergeht, der ein freies Ende aufweist und schließlich zur Anlage mit dem Spannkopf gelangt, wie es beispielsweise in Fig. 4 dargestellt ist. Diese Verlängerung 60 bewirkt somit eine Verdrehsicherung zwischen Ringelement 24 und Schellenband 14.

Die Erfindung ist nicht auf eine der vorbeschriebenen Ausführungsformen beschränkt, sondern im Rahmen der beanspruchten Erfindung in vielfältiger Weise abwandelbar.

### Bezugszeichenliste

- 10: Schelle
- 12: Flansch
- 14: Schellenband
- 14a, 14b: Schellenbandhälften
- 16: Spannkopf
- 18: Spannkopf
- 20: Spannelement
- 22: Brückenelement
- 24: Ringelement
- 25: Dichtbereich
- 26: Fixierlasche
- 28: Halteelement
- 29: Federabschnitt
- 30: Positionierlasche
- 32: Befestigungsabschnitt
- 34: fingerartige Erweiterung
- 36: Innenkontur
- 38: Öffnung
- 44: Auswölbung
- 46: Endabschnitt
- 48: Ausnehmung
- 50: Befestigungshaken
- 52: Radialabschnitt
- 54: Kontaktabschnitt
- 60: Verlängerung

## Patentansprüche

1. Ringelement (24) für eine Schelle (10) mit einem Schellenband (14), das zwei Spannköpfe (16, 18) aufweist, die über ein Spannelement (20) miteinander verbunden sind, wobei das Ringelement (24) radial innerhalb des Schellenbands (14) positionierbar ist, wobei das Ringelement (24) mindestens ein Halteelement (28) zum Abstützen an einer Innenseite des Schellenbands (14) aufweist, wobei das Halteelement (28) über einen Befestigungsabschnitt (32) in einer Axialrichtung gegenüber dem Ringelement (24) versetzt ist und sich zumindest abschnittsweise in einer Radialrichtung nach außen erstreckt, wobei das Halteelement (28) zumindest einen Federabschnitt (29) aufweist, der sich zumindest abschnittsweise in Umfangsrichtung und Radialrichtung erstreckt, **dadurch gekennzeichnet, dass** das Halteelement (28) zwei Federabschnitte (29) aufweist, die sich jeweils vom Befestigungsabschnitt in eine entgegengesetzte Umfangsrichtung erstrecken.

2. Schelle (10) mit einem Schellenband (14) und einem ringförmigen Ringelement (24) nach Anspruch 1, wobei das Schellenband (14) zwei Spannköpfe (16, 18) aufweist, die über ein Spannelement (20) miteinander verbunden sind, wobei das Ringelement (24) radial innerhalb des Schellenbands (14) positioniert ist.

3. Schelle (10) nach Anspruch 2, **dadurch gekennzeichnet, dass** das Ringelement (24) mindestens eine Fixierlasche (26) aufweist, die sich vom Ringelement (24) axial nach außen und gegebenenfalls gegenüber dem Ringelement radial nach innen versetzt erstreckt.

4. Schelle (10) nach Anspruch 3, **dadurch gekennzeichnet, dass** die mindestens eine Fixierlasche (26) flach ausgebildet ist und eine im Wesentlichen rechteckige Form aufweist.

5. Schelle (10) nach einem der vorhergehenden Ansprüche 2 bis 4, **dadurch gekennzeichnet, dass** das Ringelement mindestens eine Positionierlasche (30) aufweist, die sich von dem Ringelement (24) nach außen durch eine korrespondierende Öffnung in dem Schellenband (14) erstreckt.

6. Schelle (10) nach einem der vorhergehenden Ansprüche 2 bis 5, **dadurch gekennzeichnet, dass** ein freies Ende des Federabschnitts (29) komplementär zu einer Innenkontur (36) des Schellenbandes (14) geformt ist und an einer Innenseite des Schellenbands anliegt.

7. Schelle (10) nach einem der vorhergehenden Ansprüche 2 bis 6, **dadurch gekennzeichnet, dass** der Federabschnitt mindestens eine radial nach außen gerichtete Auswölbung (44) aufweist, die an einer Innenseite des Schellenbands anliegt.

8. Schelle nach einem der vorhergehenden Ansprüche 2 bis 7, **dadurch gekennzeichnet, dass** das Halteelement zumindest an einem Federabschnitt (29) eine Verlängerung (60) aufweist, die innenseitig am Spannkopf (16, 18) anliegt

9. Schelle nach einem der vorhergehenden Ansprüche 2 bis 8, **dadurch gekennzeichnet, dass** das Ringelement (24) mindestens einen Befestigungshaken (50) aufweist, der sich über einen Radialabschnitt (52) vom Ringelement (24) radial nach außen erstreckt, wobei sich an den Radialabschnitt (52) ein nach innen gebogener Kontaktabschnitt (54) anschließt, der zumindest teilweise parallel zu einer Außenseite des Ringelements (24) verläuft.

10. Schelle nach Anspruch 9, **dadurch gekennzeichnet, dass** das Ringelement (24) zwei nebeneinander angeordnete Befestigungshaken (50) aufweist, die im Bereich des Spannelements (20) angeordnet sind.

11. Schelle nach einem der Ansprüche 9 oder 10, **dadurch gekennzeichnet, dass** das Ringelement (24) mindestens zwei einander diametral gegenüberliegende Befestigungshaken (50) aufweist.

12. Schelle nach einem der vorhergehenden Ansprüche 2 bis 11, **dadurch gekennzeichnet, dass** das Ringelement (24) einen sich in Axialrichtung erstreckenden und konisch zulaufenden Dichtbereich (25) aufweist.

13. Schelle nach einem der vorhergehenden Ansprüche 2 bis 12, **dadurch gekennzeichnet, dass** die Fixierlasche (26) von einem radial inneren Rand des Dichtbereichs (25) ausgeht, wobei die Haltelasche (28) und gegebenenfalls der Befestigungshaken (50) von einem radial äußeren Rand des Ringelements (24) ausgeht.

14. Schelle nach einem der Ansprüche 3 bis 13, **dadurch gekennzeichnet, dass** das Halteelement (28) axial auf einer anderen Seite des Ringelements (24) angeordnet ist als die Fixierlasche (26).

15. Schelle nach einem der vorhergehenden Ansprüche 2 bis 14, **dadurch gekennzeichnet, dass** der Dichtbereich (25) als ringförmiges Dichtelement ausgebildet, das mit dem Ringelement (24) verbunden ist.

16. Leitungsverbindungsanordnung mit einem Leitungsende, an dem ein Flansch (12) ausgebildet ist, auf dem eine Schelle (10) nach einem der Ansprüche 2 bis 15 angeordnet ist.

17. Leitungsverbindungsanordnung nach Anspruch 16, **dadurch gekennzeichnet, dass** der Flansch (12) mindestens eine umfangsseitige Ausnehmung (48) aufweist, in die die mindestens eine Fixierlasche (26) eingreift.

## Claims

1. Ring element (24) for a clamp (10) with a clamp band (14) which comprises two clamping heads (16, 18) which are connected to one another by way of a clamping element (20), wherein the ring element (24) can be positioned radially within the clamp band (14), wherein the ring element (24) comprises at least one holding element (28) for support on an inner side of the clamp band (14), wherein the holding element (28) is offset in an axial direction in relation to the ring element (24) by way of a fastening portion (32) and extends outwards at least partially in a radial direction, wherein the holding element (28) comprises at least one spring portion (29) which extends at least partially in a circumferential direction and radial direction, **characterized in that** the holding element (28) comprises two spring portions (29) which in each case extend from the fastening portion in an opposite circumferential direction.

2. Clamp (10) with a clamp band (14) and a ring-shaped ring element (24) according to Claim 1, wherein the clamp band (14) comprises two clamping heads (16, 18) which are connected to one another by way of a clamping element (20), wherein the ring element (24) is positioned radially within the clamp band (14).

3. Clamp (10) according to Claim 2, **characterized in that** the ring element (24) comprises at least one fixing tab (26) which extends axially outwardly from the ring element (24) and possibly in a radially inwardly offset manner in relation to the ring element.

4. Clamp (10) according to Claim 3, **characterized in that** the at least one fixing tab (26) is of flat configuration and has a substantially rectangular form.

5. Clamp (10) according to one of the preceding Claims 2 to 4, **characterized in that** the ring element comprises at least one positioning tab (30) which extends outwardly from the ring element (24) through a corresponding opening in the clamp band (14).

6. Clamp (10) according to one of the preceding Claims 2 to 5, **characterized in that** a free end of the spring portion (29) is formed so as to be complementary to an inner contour (36) of the clamp band (14) and bears against an inner side of the clamp band.

7. Clamp (10) according to one of the preceding Claims 2 to 6, **characterized in that** the spring portion comprises at least one radially outwardly directed bulge (44) which bears against an inner side of the clamp band.

8. Clamp according to one of the preceding Claims 2 to 7, **characterized in that** the holding element comprises an elongation (60) at least on one spring portion (29), said elongation bearing against the inner side of the clamping head (16, 18).

9. Clamp according to one of the preceding Claims 2 to 8, **characterized in that** the ring element (24) comprises at least one fastening hook (50) which extends radially outwardly from the ring element (24) by way of a radial portion (52), wherein the radial portion (52) is adjoined by an inwardly bent contact portion (54) which runs at least partially parallel to an outer side of the ring element (24).

10. Clamp according to Claim 9, **characterized in that** the ring element (24) comprises two fastening hooks (50) which are arranged alongside one another and are arranged in the region of the clamping element (20) .

11. Clamp according to either of Claims 9 and 10, **characterized in that** the ring element (24) comprises at least two fastening hooks (50) which are diametrically opposite one another.

12. Clamp according to one of the preceding Claims 2 to 11, **characterized in that** the ring element (24) comprises a sealing region (25) which extends in an axial direction and which tapers in a conical manner.

13. Clamp according to one of the preceding Claims 2 to 12, **characterized in that** the fixing tab (26) proceeds from a radially inner edge of the sealing region (25), wherein the holding tab (28), and possibly the fastening hook (50), proceeds from a radially outer edge of the ring element (24).

14. Clamp according to one of Claims 3 to 13, **characterized in that** the holding element (28) is arranged axially on a different side of the ring element (24) to the fixing tab (26).

15. Clamp according to one of the preceding Claims 2 to 14, **characterized in that** the sealing region (25) is configured in the form of a ring-shaped sealing element which is connected to the ring element (24).

16. Line connection arrangement with a line end at which a flange (12) is configured, a clamp (10) according to one of Claims 2 to 15 being arranged on said flange.

17. Line connection arrangement according to Claim 16, **characterized in that** the flange (12) comprises at least one circumferential recess (48) into which the at least one fixing tab (26) engages.

## Revendications

1. Élément annulaire (24) pour un collier de serrage (10) comportant une bande de collier de serrage (14) qui présente deux têtes de serrage (16, 18) qui sont reliées l'une à l'autre par le biais d'un élément de serrage (20), l'élément annulaire (24) pouvant être positionné radialement à l'intérieur de la bande de collier de serrage (14), l'élément annulaire (24) présentant au moins un élément de retenue (28) servant au support sur un côté intérieur de la bande de collier de serrage (14), l'élément de retenue (28) étant décalé dans une direction axiale par rapport à l'élément annulaire (24) par le biais d'une partie de fixation (32) et s'étendant vers l'extérieur dans une direction radiale au moins dans certaines parties, l'élément de retenue (28) présentant au moins une partie élastique (29) qui s'étend au moins dans certaines parties dans la direction circonférentielle et dans la direction radiale, **caractérisé en ce que** l'élément de retenue (28) présente deux parties élastiques (29) qui s'étendent respectivement à partir de la partie de fixation dans un sens circonférentiel opposé.

2. Collier de serrage (10) comportant une bande de collier de serrage (14) et un élément annulaire (24) en forme d'anneau selon la revendication 1, la bande de collier de serrage (14) présentant deux têtes de serrage (16, 18) qui sont reliées l'une à l'autre par le biais d'un élément de serrage (20), l'élément annulaire (24) étant positionné radialement à l'intérieur de la bande de collier de serrage (14).

3. Collier de serrage (10) selon la revendication 2, **caractérisé en ce que** l'élément annulaire (24) présente au moins une languette de fixation (26) qui s'étend axialement vers l'extérieur à partir de l'élément annulaire (24) et éventuellement de manière décalée radialement vers l'intérieur par rapport à l'élément annulaire.

4. Collier de serrage (10) selon la revendication 3, **caractérisé en ce que** l'au moins une languette de fixation (26) est réalisée de manière plane et présente une forme sensiblement rectangulaire.

5. Collier de serrage (10) selon l'une des revendications 2 à 4 précédentes, **caractérisé en ce que** l'élément annulaire présente au moins une languette de positionnement (30) qui s'étend à partir de l'élément annulaire (24) vers l'extérieur à travers une ouverture correspondante dans la bande de collier de serrage (14).

6. Collier de serrage (10) selon l'une des revendications 2 à 5 précédentes, **caractérisé en ce qu'**une extrémité libre de la partie élastique (29) est formée de manière complémentaire à un contour intérieur (36) de la bande de collier de serrage (14) et s'appuie contre un côté intérieur de la bande de collier de serrage.

7. Collier de serrage (10) selon l'une des revendications 2 à 6 précédentes, **caractérisé en ce que** la partie élastique présente au moins un bombement (44) orienté radialement vers l'extérieur, lequel s'appuie contre le côté intérieur de la bande de collier de serrage.

8. Collier de serrage selon l'une des revendications 2 à 7 précédentes, **caractérisé en ce que** l'élément de retenue présente un prolongement (60) au moins au niveau d'une partie élastique (29), lequel prolongement s'appuie contre le côté intérieur de la tête de serrage (16, 18).

9. Collier de serrage selon l'une des revendications 2 à 8 précédentes, **caractérisé en ce que** l'élément annulaire (24) présente au moins un crochet de fixation (50) qui s'étend radialement vers l'extérieur à partir de l'élément annulaire (24) par le biais d'une partie radiale (52), une partie de contact (54) courbée vers l'intérieur se raccordant à la partie radiale (52), laquelle partie de contact s'étend au moins partiellement parallèlement à un côté extérieur de l'élément annulaire (24) .

10. Collier de serrage selon la revendication 9, **caractérisé en ce que** l'élément annulaire (24) présente deux crochets de fixation (50) juxtaposés qui sont disposés dans la région de l'élément de serrage (20).

11. Collier de serrage selon l'une des revendications 9 ou 10, **caractérisé en ce que** l'élément annulaire (24) présente au moins deux crochets de fixation (50) diamétralement opposés.

12. Collier de serrage selon l'une des revendications 2 à 11 précédentes, **caractérisé en ce que** l'élément annulaire (24) présente une région d'étanchéité (25) s'étendant dans la direction axiale et se terminant de manière conique.

13. Collier de serrage selon l'une des revendications 2 à 12 précédentes, **caractérisé en ce que** la languette de fixation (26) part d'un bord radialement intérieur de la région d'étanchéité (25), la languette de retenue (28) et éventuellement le crochet de fixation (50) partant d'un bord radialement extérieur de l'élément annulaire (24) .

14. Collier de serrage selon l'une des revendications 3 à 13, **caractérisé en ce que** l'élément de retenue (28) est disposé axialement sur un autre côté de l'élément annulaire (24) que la languette de fixation (26).

15. Collier de serrage selon l'une des revendications 2 à 14 précédentes, **caractérisé en ce que** la région d'étanchéité (25) est réalisée sous forme d'élément d'étanchéité en forme d'anneau qui est relié à l'élément annulaire (24).

16. Agencement de liaison de conduite comportant une extrémité de conduite au niveau de laquelle une bride (12) est réalisée, sur laquelle un collier de serrage (10) selon l'une des revendications 2 à 15 est disposé.

17. Agencement de liaison de conduite selon la revendication 16, **caractérisé en ce que** la bride (12) présente au moins un évidement (48) circonférentiel dans lequel l'au moins une patte de fixation (26) vient en prise.
